# EUROPÄISCHE PATENTANMELDUNG

(11) **EP 1 832 561 A2**
(43) Veröffentlichungstag der Anmeldung: **12.09.2007**
(21) Anmeldenummer: 07004782.4
(22) Anmeldetag: 08.03.2007
(51) Int. Cl.: C04B 5/00, C04B 7/17, C04B 7/21, C04B 28/08, C21B 3/04

(54) **Mineralzement**

(30) Priorität: 08.03.2006 DE 202006003653 U
(71) Anmelder: Wethmar, Herbert, Dipl.-Kaufm., 42699 Solingen (DE)
(72) Erfinder: Die Erfindernennung liegt noch nicht vor
(74) Vertreter: HOFFMANN EITLE

(57) **Zusammenfassung**

Ein hydraulisches Bindemittel auf der Basis von gebrochenem Hüttensand und alkalischen oder sulfatischen Anregern. Als alkalische Anreger dienen vornehmlich Weißkalke, als sulfatische Anreger werden die Anreger Gips oder Anhydrit eingesetzt. Die Gewichtsanteile gebrochener Hüttensand zu Anreger stehen je nach Wahl des Anregers in einem Verhältnis von 95 : 5 % bis hin zu 80 : 20 %.

## Beschreibung

In der gegenwärtigen Betontechnologie sind im Wesentlichen zwei Entwicklungstendenzen erkennbar. Das Bindemittel Zement mit hohen Frühfestigkeiten wird für die Fertigung von Beton bevorzugt. Hohe Frühfestigkeiten des Zementes werden erzeugt durch hohe Feinheitsanteile in dem gemahlenen Gut. Die Kornfraktionen eines Portlandzementes mit einer Feinheit von 3600 cm2/g Blaine beginnen bei 0,5 µ und enden bei 60 µ. In dieser Qualität liegen die für die Frühfestigkeit nach 1 Tag verantwortlichen Partikel kleiner 4 µ bei nahezu 20 Gew.-%. Feine Zemente bedingen gleichzeitig einen Anstieg des Bedarfes an Wasser, der niedrigere Betonfestigkeiten auslöst.

Der Zuschlag, als Siebliniengemisch von natürlichen oder gebrochenen Gesteinskörnungen, beginnt ex definitione bei einer Feinheit von 0,125 mm und endet bei maximal 32 mm. Gesteinskörnungen für Hochleistungsbetone als Gemische bewegen sich zwischen 0,125 mm und 8 mm. In der Praxis sind die Körnungsanteile 0,125 bis 0,250 unzureichend oder gar nicht vertreten.

Die fehlenden Körnungsanteile über 60 µ beim Zement und die nicht vorhandenen Feinanteile im Zuschlag von 125 µ bis zu 250 µ bilden den unbesetzten Raum, den es gilt, mit dem für diesen Betonbereich erzeugten hydraulischen Bindemittel Mineralzement zu füllen. Dabei ragen die Feinanteile des Mineralzementes in den Bereich Zement hinein und ergänzen auch dort die unterbesetzte Kornstruktur.

Das Bindemittel Mineralzement hat die physikalische Wirkung der Verdichtung des für den Beton nötigen Zementes, was einer sog. Entlüftung gleichkommt. In dem Verhältnis der Luftverdrängung nimmt die Schüttdichte des Zementes zu. Die damit einhergehende Verdichtung der gesamten Menge Bindemittel bedingt eine verbesserte Verarbeitbarkeit des Mörtels und damit des Betons. Die bessere Verarbeitbarkeit ist eine Folge der durch den Mineralzement erfolgten gestreckten Kornverteilung der Bindemittel insgesamt und der damit einhergehenden Einsparung an Wasser. Die optimierte Zugabe wird durch die Anwendung der Regeln des Patentes DE 198 39 436 "Verfahren zur Optimierung von Zuschlagstoffgemischen für Hochleistungsbeton" gewährleistet bzw. gemessen.

Das Bindemittel Mineralzement trägt zur Festigkeit des Betons selbst auch bei, wobei der zeitliche Beitrag nach Partikelgröße abläuft. Da die Hydratation des Zementes in 28 Tagen lediglich 3-4 µ in das Zementkorn eindringt, werden die Kornanteile des Mineralzementes größer 125 µ sinnvollerweise als aktiver Zuschlag des Mineralzementes definiert.

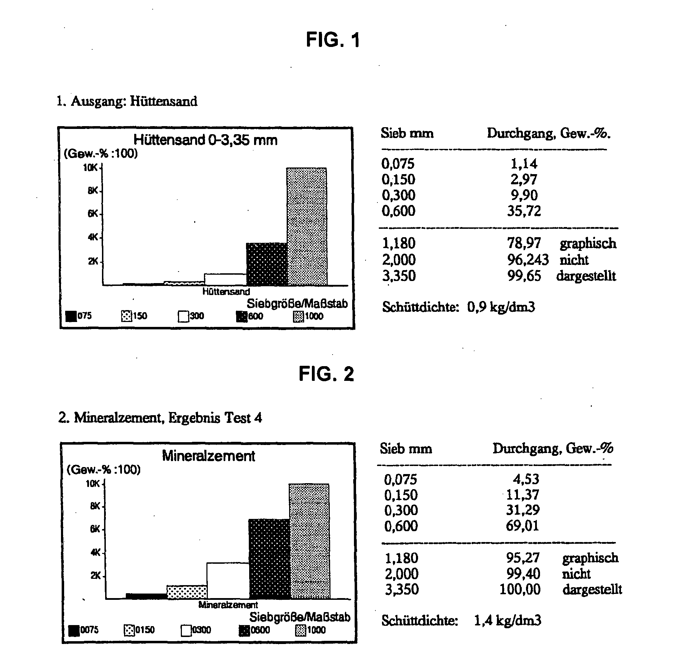

## Patentansprüche

1. Ein hydraulisches Bindemittel auf der Basis von gebrochenem Hüttensand und alkalischen oder sulfatischen Anregern, wobei als alkalische Anreger vornehmlich Weißkalke dienen und als sulfatische Anreger die Anreger Gips oder Anhydrit eingesetzt werden, und wobei die Gewichtsanteile gebrochener Hüttensand zu Anreger je nach Wahl des Anregers in einem Verhältnis von 95 : 5 % bis hin zu 80 : 20 % stehen.

2. Hochleistungszemente als sog. Mischzemente, die durch gemeinsames Vermischen auf der Basis des hydraulischen Bindemittels nach Anspruch 1 mit herkömmlichen Zementen, insbesondere Portlandzementen entstehen, wobei die Leistung der Mischzemente im Verhältnis zu der Schüttdichte steht, die durch die Vermischung erzielt wird, und hohe Schüttdichten vorteilhaften Kornverteilungen entsprechen.

3. Ein nach Anspruch 1 zerkleinertes Hüttensandgemisch und gewonnenes Bindemittel, hergestellt aus frischem, nicht getrocknetem Hüttensand, für die Fertigung von Frischbeton, vornehmlich den Feinbetonen und selbstverdichtenden Fließbetonen.

4. Ein nach Anspruch 1 gefertigtes hydraulisches Bindemittel mit erhöhter Bindemittelleistung, die durch Trennung des Aufgabegutes mittels sog. Siebmaschinen in grob und fein erreicht wird, wobei die Grobanteile als Zuschlag verwendbar sind.

5. Die Prallbrechung des Hüttensandes nach Anspruch 1 zu Hüttensandgemischen als Basisprodukt für die Herstellung von verbesserten Hüttensandmehlen in herkömmlichen Kugelmühlen oder neuzeitlichen Mahlanlagen wie Walzenschüsselmühlen.
